# EUROPEAN PATENT SPECIFICATION

(11) **EP 2 748 448 B1**
(45) Date of publication and mention of the grant of the patent: **18.11.2015**
(21) Application number: 12748241.2
(22) Date of filing: 23.07.2012
(51) Int. Cl.: F02D 35/02, G01M 15/11

(54) **METHOD AND ARRANGEMENT FOR CONTROLLING MISFIRE**
VERFAHREN UND ANORDNUNG ZUR STEUERUNG VON FEHLZÜNDUNGEN
PROCÉDÉ ET AGENCEMENT POUR LE RÉGLAGE D'UN DÉFAUT D'ALLUMAGE

(30) Priority: 25.08.2011 FI 20115823
(43) Date of publication of application: 02.07.2014
(73) Proprietor: Wärtsilä Finland Oy, 65380 Vaasa (FI)
(72) Inventor: ÖSTMAN, Fredrik, FI-65100 Vaasa (FI); PORTIN, Kaj, FI-65300 Vaasa (FI)
(74) Representative: Berggren Oy Ab
(86) International application number: PCT/FI2012/050746
(87) International publication number: WO 2013/026950

(56) References cited:
- US-A- 6 158 411
- US-A1- 2008 264 360
- US-B1- 7 031 828

## Description

### Field of technology

This invention relates to a method and arrangement for controlling harmful events of a reciprocating engine. Especially, the invention relates to misfiring. The engine can be, for example, a diesel engine, a gas engine or an engine that can use a multiple of different fuels. Further, the engine can be a low-speed engine or a medium speed engine.

### Prior art

Reciprocating engines are nowadays electronically controlled. In this way a good driving properties of the engine are possible, and the engine can be run on an optimal level wherein efficiency is good with low emissions. In spite of the running at the optimal level, harmful events may occur. A cylinder/s may misfire due to, for example, external disturbance. It is important that the misfire is detected for avoiding excessive emission of unburned gas into an exhaust pipe system. This increases emissions and may for continuous misfires also result in dangerous explosions.

There exist many known solutions to detect misfire. For example, angular speed of a crankshaft, ion current during combustion, air-fuel ratio or vibration levels nearby the cylinders are used. Air/fuel ratio is typically used to indicate misfire condition of a cylinder. The aim is to avoid the misfire condition and for this reason there are used threshold values to indicate the misfire condition. JP 2004076668 represents a prior art control device having threshold values (air-fuel ratio) for lean misfire and rich misfire. The known solutions follow the parameters indicating the misfire condition, and when the threshold value is exceeded, the misfire control reacts for eliminating the misfire. The existing solutions are very useful, but still it desirable to have a control device providing better quality.

US6158411 discloses a misfire control arrangement connectable to cylinder specific first sensors and to second sensors of at least two different types, comprising a map indicating misfire area and an operation point of the engine. Misfire control commands are formed as a response to the operation point being located within the misfire area.

### Short Description

The objective of the invention is to create a control arrangement that can provide improved control response with respect to previous solutions. The objective is achieved in solutions described in the independent claims. The dependent claims describe different embodiments of the invention. Although this text mainly describes the misfiring as a harmful event of the engine, the event can be another type of an undesired condition like knocking. In the case of the other type the control arrangement is adapted to that particular type of the harmful event.

The idea of the invention is that in addition to the reacting to the misfire, the operation condition of the engine is defined in relation to the misfire condition in order to avoid the misfire beforehand and also to control the engine more flexible than in the previous solutions.

The inventive arrangement comprises a control unit that is arranged to form misfire control commands to cylinder specific regulating units and is connectable to cylinder specific first sensors. The control unit is also connectable to second sensors of at least two different types. The arrangement further comprises a map for mapping values of the first sensors and the second sensors. The values of the first sensors indicate misfire conditions cylinder specifically and the values of the second sensors indicate at least two variables of the engine. The map indicates also a misfire area and an operation point of the engine in relation to the variables and the misfire condition.

The arrangement further comprises a calculator unit and an adjusting unit. The calculator unit is arranged to calculate the shortest distance between the operation point and the misfire area, and also arranged to calculate a gradient of the distance. The adjusting unit is arranged to form the misfire control commands for regulator units of said variables as a response to the gradient for increasing the distance.

### Drawings

Next the invention is described in more detail with the figures of the attached drawings in which drawings
- Figure 1: illustrates an example of an inventive arrangement,
- Figure 2: illustrates an example of a map of the invention, and

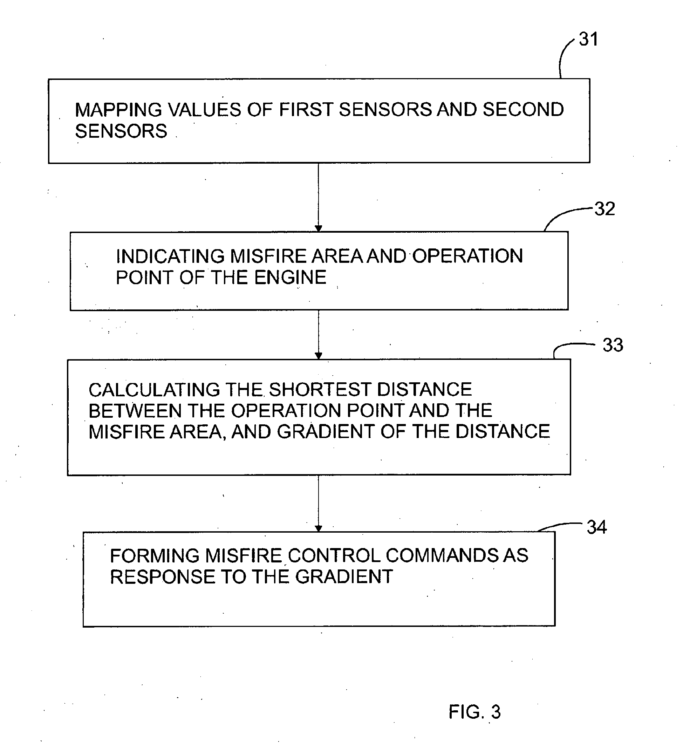

- Figure 3: illustrates an example of a diagram showing an inventive method.

### Description

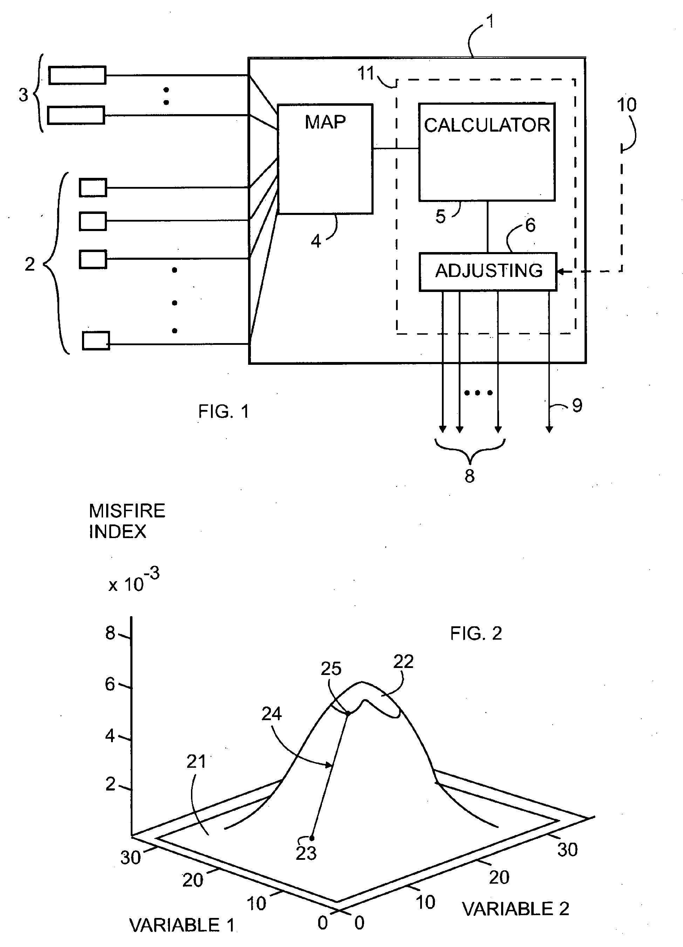

Figure 1 illustrates an example of an arrangement according to the invention. The control arrangement for reciprocating engines comprises a control unit 1 that is arranged to form misfire control commands 8 to cylinder specific regulator units and is connectable to cylinder specific first sensors 3. The control unit is also connectable to second sensors 2 of at least two different types. The second sensors 2 measure different parameters of the engine. These parameters are not constant so they are variables that can be used for controlling the engine. The variables may be, for example, manifold air pressure, manifold air temperature, main fuel injection timing, main fuel injection duration, exhaust gas recirculation, spark timing, pilot fuel injection timing and pilot fuel injection duration. The set of control variables is dependent on the engine and fuel system type. For example, in common-rail diesel engines, manifold air pressure, manifold air temperature, main fuel injection timing and main fuel injection duration are typical choices for the variables to be measured and controlled. The first sensors 1 measure a cylinder specific parameter that indicates misfire condition.

The arrangement further comprises a map or model 4 for mapping values of the first 3 and second 2 set of sensors. The values of the second sensors indicate at least two variables of the engine. Figure 2 shows an example of the map 21 that is three-dimensional. The map 4, 21 indicates a misfire area 22 and an operation point 23 of the engine in relation to the variables (VARIABLE 1 and VARIABLE 2) and the misfire condition (MISFIRE INDEX). The map can be, for example, a self-organizing map. The model can be any type that is able to describe relationship between at least two signals, such as a neural network or a differential function. The misfire condition axis (or vector), i.e. the misfire index axis can have a scale that is based on a measurement value scale or a normalized measurement value scale. The misfire index may represent, for example, an IMEP value (an indicated mean effective pressure) or a vibration level nearby the cylinder.

The arrangement further comprises a calculator unit 5 that is arranged to calculate the shortest distance 24 between the operation point 23 and the misfire area 22, to be more accurate the distance 24 between the operation point 23 and the nearest misfire point 25. The calculator unit is also arranged to calculate a gradient of the distance 24. The gradient comprises partial derivates in relation to the variables. In addition the arrangement comprises an adjusting unit 6 to form the misfire control commands 8 to regulator units of said variables as a response to the gradient for increasing the distance. The adjusting unit can be arranged to select the largest partial derivates for forming the misfire control commands. In this way it is possible to increase the distance between the operation point 23 and the nearest misfire point 25 fast. It also makes possible to move the operation point as little as possible, since the other variables are not changed and the small change of the variable/s having the largest partial derivate can increase the distance enough. The adjusting unit 6 can also be arranged to receive auxiliary data 10 of the engine, and also be arranged to use the auxiliary data to form the misfire control commands.

It can be noted that the calculator unit 5 and the adjusting unit 6 can be arranged to form one unit 11, which alternative is represented as a box with a dashed line in Figure 1. The adjusting unit may also provide diagnostic information 9 to maintenance personnel. The map or model can be arranged to be updated to take into account the values of the first sensors and the second sensors. In this way the map is always up-to-date to the engines running environment and condition. An initial map or model can be based on tests run in an engine laboratory or manufacturing tests.

The invention concerns also a method for controlling misfire of a reciprocating engine wherein the method comprises a step of forming misfire control commands 34 to cylinder specific regulating units. The method further comprises steps of: mapping 31 values of first sensors 3 and second sensors 2, the values of the first sensors indicating misfire condition cylinder specifically and the values of the second sensors indicating at least two variables the engine; indicating 32 misfire area 22 and an operation point 23 of the engine in relation to the variables and the misfire condition; calculating 33 the shortest distance 24 between the operation point 23 and the misfire area 22, and also a gradient of the distance. Said step of forming 34 the misfire control commands (8) has been adapted to form the commands to regulating units of said variables as a response to the gradient for increasing the distance 24.

It is also possible that when misfire occurs or is very near to occur the inventive arrangement can be arranged to determine first whether all cylinders of the engine are too close the misfire area or in the misfire area. In these cases general control variables of the engine are used to eliminate or reduce the misfire, for example manifold air pressure, manifold air temperature and exhaust gas recirculation. Secondly the arrangement is arranged to control cylinder wise the misfiring cylinders using cylinder-wise control variables, for example, main fuel injection timing, main fuel injection duration, spark timing, pilot fuel injection timing and pilot fuel injection duration.

The invention makes it possible to adjust one, some or all variables that are inserted into the map 4. Therefore there is great flexibility to form the control commands. The greater the distance is between the operation point and the misfire area, the greater the flexibility is. Due to this there are more ways to run the engine than in prior art arrangements, and also taking into account load conditions in more detail. As said above when changing only the greatest partial derivate of the gradient, the control response is very fast and to the right direction. This means that the misfire control command does not direct to a wrong direction, which maybe the case in the prior art solutions. Lean misfire (too lean air/fuel ratio) or rich misfire (too rich air/fuel ratio) is typically difficult to separate in the prior art, which means that the control command may direct to a wrong direction. Even if the control command is to the right direction, for example eliminating the lean misfire, it may change the operation of the engine too much, which causes the rich misfire. So, the invention makes it also possible to recognize the lean and rich misfire reliably. On the other hand, if the misfire occurs despite a good fuel mix, it can be derive that the ignition system has malfunction.

## Claims

1. A misfire control arrangement for reciprocating engines that comprises a control unit (1) that is arranged to form misfire control commands (8) to cylinder specific regulating units and is connectable to cylinder specific first sensors (3), wherein the control unit (1) is connectable to second sensors (2) of at least two different types, and the arrangement further comprises a map or model (4, 21) for mapping values of the first sensors (3) and the second sensors (2), the values of the first sensors indicating misfire condition cylinder specifically and the values of the second sensors indicating at least two variables the engine, the map or model indicating misfire area (22) and an operation point (23) of the engine in relation to the variables and the misfire condition,
**characterized in that** the arrangement further comprises a calculator unit (5) that is arranged to calculate the shortest distance (24) between the operation point (23) and the misfire area (22), and also arranged to calculate a gradient of the distance,
and also comprises an adjusting unit (6) to form the misfire control commands (8) to regulating units of said variables as a response to the gradient for increasing the distance (24).

2. An arrangement according to claim 1, **characterized in that** the adjusting unit (6) is arranged to select the largest partial derivate or derivates of the gradient for forming the misfire control commands.

3. An arrangement according to claim 2, **characterized in that** the adjusting unit (6) is arranged to receive auxiliary data (10) of the engine, and also arranged to use the auxiliary data to form the misfire control commands (8).

4. An arrangement according to claim 3, **characterized in that** the calculator unit (5) and the adjusting unit (6) are arranged to form one unit (11).

5. An arrangement according to claim 4, **characterized in that** the map or model (4, 21) is arranged to be updated to take into account the values of the first sensors (3) and the second sensors (2).

6. An arrangement according to claim 1 - 5, **characterized in that** the values of the second sensors (2) indicate at least two of the next variables: manifold air pressure, manifold air temperature, main fuel injection timing, main fuel injection duration, exhaust gas recirculation, spark timing, pilot fuel injection timing and pilot fuel injection duration.

7. An arrangement according to claim 1 -5, **characterized in that** in case of the misfire the arrangement is first arranged to determine whether all cylinders of the engine are too close the misfire area or in the misfire area in which case at least two of the next variables are used: manifold air pressure, manifold air temperature and exhaust gas recirculation,
and secondly arranged to control cylinder wise the misfiring cylinders using at least one of the next variables: main fuel injection timing, main fuel injection duration, spark timing, pilot fuel injection timing and pilot fuel injection duration.

8. A method for controlling misfire of a reciprocating engine, the method comprising a step of forming misfire control commands to cylinder specific regulating units, the method further comprising steps of mapping (31) values of first sensors (3) and second sensors (2), the values of the first sensors indicating misfire condition cylinder specifically and the values of the second sensors indicating at least two variables the engine,
indicating (32) misfire area (22) and an operation point (23) of the engine in relation to the variables and the misfire condition, and
calculating (33) the shortest distance (24) between the operation point (23) and the misfire area (22), and also a gradient of the distance,
which step of forming (34) the misfire control commands (8) being adapted to form said commands to regulating units of said variables as a response to the gradient for increasing the distance (24).

## Patentansprüche

1. Fehlzündungsregelungsanordnung für Hubkolben-Kraftmaschinen, die eine Steuereinheit (1) umfasst, die dafür angeordnet ist, Fehlzündungsregelkommandos (8) an zylinderspezifische Regulierungseinheiten zu bilden, und mit zylinderspezifischen ersten Sensoren (3) verbunden werden kann, wobei die Steuereinheit (1) mit zweiten Sensoren (2) von wenigstens zwei unterschiedlichen Arten verbunden werden kann und die Anordnung ferner eine Abbildung oder ein Modell (4, 21) zum Abbilden von Werten der ersten Sensoren (3) und der zweiten (2) umfasst, wobei die Werte der ersten Sensoren zylinderspezifisch eine Fehlzündungsbedingung angeben und die Werte der zweiten Sensoren wenigstens zwei Variablen der Kraftmaschine angeben, wobei die Abbildung oder das Modell einen Fehlzündungsbereich (22) und einen Betriebspunkt (23) der Kraftmaschine im Verhältnis zu den Variablen und der Fehlzündungsbedingung angibt,
**dadurch gekennzeichnet, dass** die Anordnung ferner eine Rechnereinheit (5) umfasst, die dafür angeordnet ist, die kürzeste Entfernung (24) zwischen dem Betriebspunkt (23) und dem Fehlzündungsbereich (22) zu berechnen, und ebenfalls dafür angeordnet ist, einen Gradienten der Entfernung zu berechnen,
und ebenfalls eine Einstellungseinheit (6) zum Bilden der Fehlzündungsregelungskommandos (8) an Regulierungseinheiten der Variablen als eine Reaktion auf den Gradienten, um die Entfernung (24) zu steigern, umfasst.

2. Anordnung nach Anspruch 1, **dadurch gekennzeichnet, dass** die Einstellungseinheit (6) dafür angeordnet ist, die größte(n) partielle(n) Ableitung oder Ableitungen des Gradienten zum Bilden der Fehlzündungsregelungskommandos auszuwählen.

3. Anordnung nach Anspruch 2, **dadurch gekennzeichnet, dass** die Einstellungseinheit (6) dafür angeordnet ist, Hilfsdaten (10) der Kraftmaschine zu empfangen, und ebenfalls dafür angeordnet ist, die Hilfsdaten zu verwenden, um die Fehlzündungsregelungskommandos (8) zu bilden.

4. Anordnung nach Anspruch 3, **dadurch gekennzeichnet, dass** Rechnereinheit (5) und die Einstellungseinheit (6) so angeordnet sind, dass sie eine Einheit (11) bilden.

5. Anordnung nach Anspruch 4, **dadurch gekennzeichnet, dass** die Abbildung oder das Modell (4, 21) dafür angeordnet ist, aktualisiert zu werden, um die Werte der ersten Sensoren (3) und der zweiten Sensoren (2) zu berücksichtigen.

6. Anordnung nach einem der Ansprüche 1 bis 5, **dadurch gekennzeichnet, dass** die Werte der zweiten Sensoren (2) wenigstens zwei der folgenden Variablen angeben: Verteiler-Luftdruck, Verteiler-Lufttemperatur, Hauptkraftstoff-Einspritzzeitpunkt, Hauptkraftstoff-Einspritzdauer, Abgasrückführung, Funkenzündung, Zündkraftstoff-Einspritzzeitpunkt und Zündkraftstoff-Einspritzdauer.

7. Anordnung nach einem der Ansprüche 1 bis 5, **dadurch gekennzeichnet, dass** im Fall der Fehlzündung die Anordnung erstens dafür angeordnet ist, festzustellen, ob sich alle Zylinder der Kraftmaschine zu nahe am Fehlzündungsbereich oder im Fehlzündungsbereich befinden, wobei in diesem Fall wenigstens zwei der folgenden Variablen verwendet werden: Verteiler-Luftdruck, Verteiler-Lufttemperatur und Abgasrückführung
und zweitens dafür angeordnet ist, die fehlzündenden Zylinder zylinderweise unter Verwendung wenigstens einer der folgenden Variablen zu steuern: Hauptkraftstoff-Einspritzzeitpunkt, Hauptkraftstoff-Einspritzdauer, Funkenzündung, Zündkraftstoff-Einspritzzeitpunkt und Zündkraftstoff-Einspritzdauer.

8. Verfahren zum Regeln der Fehlzündung einer Hubkolben-Kraftmaschine, wobei das Verfahren einen Schritt des Bildens von Fehlzündungsregelkommandos an zylinderspezifische Regulierungseinheiten umfasst, wobei das Verfahren ferner die folgenden Schritte umfasst:
das Abbilden (31) von Werten von ersten Sensoren (3) und zweiten Sensoren (2), wobei die Werte der ersten Sensoren zylinderspezifisch eine Fehlzündungsbedingung angeben und die Werte der zweiten Sensoren wenigstens zwei Variablen der Kraftmaschine angeben,
das Angeben (32) eines Fehlzündungsbereichs (22) und eines Betriebspunkts (23) der Kraftmaschine im Verhältnis zu den Variablen und der Fehlzündungsbedingung und
das Berechnen (33) der kürzesten Entfernung (24) zwischen dem Betriebspunkt (23) und dem Fehlzündungsbereich (22) und ebenfalls eines Gradienten der Entfernung,
wobei der Schritt des Bildens (34) von Fehlzündungsregelkommandos (8) dafür eingerichtet ist, die Kommandos an Regulierungseinheiten der Variablen als eine Reaktion auf den Gradienten zu bilden, um die Entfernung (24) zu steigern.

## Revendications

1. Agencement de contrôle de raté d'allumage pour des moteurs à mouvement alternatif qui comprend une unité de contrôle (1) qui est agencée pour former des commandes de contrôle de raté d'allumage (8) pour des unités de régulation spécifiques aux cylindres et est raccordable à des premiers capteurs spécifiques aux cylindres (3), dans lequel l'unité de contrôle (1) est raccordable à des deuxièmes capteurs (2) d'au moins deux types différents et l'agencement comprend en plus une carte ou modèle (4, 21) pour cartographier des valeurs des premiers capteurs (3) et des deuxièmes capteurs (2), les valeurs des premiers capteurs indiquant spécifiquement le cylindre présentant un état de raté d'allumage et les valeurs des deuxièmes capteurs indiquant au moins deux variables du moteur, la carte ou le modèle indiquant la zone de raté d'allumage (22) et un point de fonctionnement (23) du moteur en rapport avec les variables et l'état de raté d'allumage,
**caractérisé en ce que** l'agencement comprend en plus une unité de calculateur (5) qui est agencée pour calculer la distance la plus courte (24) entre le point de fonctionnement (23) et la zone de raté d' allumage (22) et également agencée pour calculer un gradient de la distance
et comprend également une unité d'ajustement (6) pour former les commandes de contrôle de raté d'allumage (8) pour les unités de régulation desdites variables en réponse au gradient pour augmenter la distance (24).

2. Agencement selon la revendication 1, **caractérisé en ce que** l'unité d'ajustement (6) est agencée pour sélectionner la ou les dérivée (s) partielle (s) la/les plus grande(s) du gradient pour former les commandes de contrôle de raté d'allumage.

3. Agencement selon la revendication 2, **caractérisé en ce que** l'unité d'ajustement (6) est agencée pour recevoir les données auxiliaires (10) du moteur et également agencée pour utiliser les données auxiliaires pour former les commandes de contrôle de raté d'allumage (8).

4. Agencement selon la revendication 3, **caractérisé en ce que** l'unité de calculateur (5) et l'unité d'ajustement (6) sont agencées pour former une unité (11).

5. Agencement selon la revendication 4, **caractérisé en ce que** la carte ou le modèle (4, 21) est agencé pour être mis à jour pour prendre en compte les valeurs des premiers capteurs (3) et des deuxièmes capteurs (2).

6. Agencement selon la revendication 1 à 5, **caractérisé en ce que** les valeurs des deuxièmes capteurs (2) indiquent au moins deux des variables suivantes : pression d'air du collecteur, température d'air du collecteur, réglage de l'avance à l'injection de carburant principal, durée d'injection du carburant principal, recirculation des gaz d'échappement, calage de l'allumage, réglage de l'avance à l'injection du carburant pilote et durée de l'injection du carburant pilote.

7. Agencement selon la revendication 1 à 5, **caractérisé en ce qu'**en cas de raté d'allumage, l'agencement est d'abord agencé pour déterminer si tous les cylindres du moteur sont trop proches de la zone de raté d' allumage ou dans la zone de raté d' allumage, auquel cas au moins deux des variables suivantes sont utilisées : pression d'air du collecteur, température d'air du collecteur et recirculation des gaz d'échappement,
et ensuite agencé pour contrôler par cylindre, les cylindres présentant un raté d'allumage en utilisant au moins une des variables suivantes : réglage de l'avance à l'injection de carburant principal, durée de l'injection du carburant principal, calage de l'allumage, réglage de l'avance à l'injection du carburant pilote et durée de l'injection du carburant pilote.

8. Méthode pour contrôler un raté d'allumage d'un moteur à mouvement alternatif, ladite méthode comprenant une étape de formation de commandes de contrôle de raté d'allumage pour les unités de régulation spécifiques aux cylindres, ladite méthode comprenant en plus les étapes
de cartographie (31) des valeurs des premiers capteurs (3) et des deuxièmes capteurs (2), des valeurs des premiers capteurs indiquant spécifiquement le cylindre présentant un état de raté d'allumage et des valeurs des deuxièmes capteurs indiquant au moins deux variables du moteur,
d'indication (32) de la zone de raté d'allumage (22) et d'un point de fonctionnement (23) du moteur en rapport avec les variables et l'état de raté d'allumage, et
de calcul (33) de la distance la plus courte (24) entre le point de fonctionnement (23) et la zone de raté d'allumage (22) et également d'un gradient de la distance,
laquelle étape de formation (34) des commandes de contrôle de raté d'allumage (8) étant adaptée pour former lesdites commandes pour les unités de régulation desdites variables en réponse au gradient pour augmenter la distance (24).
